(19) Europäisches Patentamt
European Patent Office
Office européen des brevets

(11) **EP 4 667 963 A1**

(12) **EUROPEAN PATENT APPLICATION**

(43) Date of publication:
**24.12.2025 Bulletin 2025/52**

(21) Application number: **24183589.1**

(22) Date of filing: **21.06.2024**

(51) International Patent Classification (IPC):
**G01S 7/03** $^{(2006.01)}$ **G01S 13/42** $^{(2006.01)}$
**G01S 13/931** $^{(2020.01)}$

(52) Cooperative Patent Classification (CPC):
**G01S 7/034; G01S 13/003; G01S 13/42; G01S 13/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventors:
• **TORRES, Felipe**
**8200 Schaffhausen (CH)**
• **KAZIMI, Sadam Hussain**
**8200 Schaffhausen (CH)**
• **VOLLBRACHT, Dennis**
**8200 Schaffhausen (CH)**

(74) Representative: **Manitz Finsterwald**
**Patent- und Rechtsanwaltspartnerschaft mbB**
**Martin-Greif-Straße 1**
**80336 München (DE)**

(54) **RADAR SYSTEMS AND METHODS FOR OPERATING A RADAR SYSTEM**

(57) A radar system comprises: a first array of antennas, comprising a first plurality of antennas; a second array of antennas, comprising a second plurality of antennas, wherein the antennas of the first array are spaced wider than the antennas of the second array; and a controller configured to operate a first receive channel at a first frequency using the first array of antennas and to operate a second receive channel at a second frequency using the second array of antennas, wherein the first frequency is different from the second frequency.

<u>100</u>

Fig. 1A

**Description**

FIELD

The present disclosure relates to radar systems and methods for operating a radar system.

BACKGROUND

In automotive applications, radar antenna systems may consist of an array of antennas to determine the angle of arrival (AoA) of reflections from objects in the field of view. To determine these angles unambiguously, the distance between each individual antenna must be at least half a wavelength of the antenna design frequency. Angular accuracy and beamwidth are proportional to the antenna aperture. Therefore, to achieve a given angular accuracy and at the same time determine the AoA unambiguously, the number of antenna elements must increase proportionally to the size of the aperture.

However, it may be desirable to design an antenna array with as few individual elements as possible so as not to increase the cost and to be able to determine the AoA with an angular accuracy that suits the intended application. Usually every individual antenna is connected to a MMIC (monolithic microwave integrated circuit) channel.

Accordingly, there is a need to provide improved radar antenna systems.

SUMMARY

The present disclosure provides a radar system, a vehicle, a computer implemented method, and a non-transitory computer readable medium according to the independent claims. Embodiments are given in the subclaims, the description and the drawings.

In one aspect, the present disclosure is directed at a radar system comprising: a first array of antennas, comprising a first plurality of antennas; a second array of antennas, comprising a second plurality of antennas, wherein the antennas of the first array are spaced wider than the antennas of the second array; and a controller configured to operate a first receive channel at a first frequency using the first array of antennas and to operate a second receive channel at a second frequency using the second array of antennas, wherein the first frequency is different from the second frequency.

In other words, a dual-frequency system may be provided by the use of dualband/broadband transmit and receive antennas, coupled with frequency-selective transmit and receive antennas connected to the same MMIC port of the radar device. The use of frequency-selective antennas with dualband/broadband antennas on two different frequencies may create overlapping points, whereby the different arrays are anchored to each other by broad-band/dualband antenna elements, which may have the same position in both frequencies in combination with frequency-selective antennas.

According to various embodiments, two or multiple targets may be resolved using a dual-frequency approach with less number of receive channels.

According to various embodiments, the antenna system may share the same MMIC channels for dense array and sparse array by using two different frequency bands.

According to various embodiments, the angle-of-arrival (AoA) estimation in a radar system may be enhanced through an additional antenna array sharing the same receiver channels.

According to various embodiments, automotive radar antenna arrays may be provided, employing dual frequency bands to power two separate antenna systems from a common monolithic microwave integrated circuit (MMIC) port. This configuration may enable the creation of both dense and sparse arrays or two distinct sets of arrays, enhancing angular accuracy and reducing computational complexity. The dense array may disambiguate measurements of the sparse array, providing a larger aperture, while two sparse arrays may offer increased accuracy. The system may offer both ambiguous and unambiguous measurements capability for determining angle-of-arrival (AoA) of targets, and may provide improvements in angular accuracy with fewer receive channels.

According to an embodiment, the controller is further configured to determine an angle of arrival of a radar signal based on the first receive channel and the second receive channel.

According to an embodiment, the controller is further configured to enhance a detection quality of an unambiguous angle of arrival (AoA) based on the first receive channel and the second receive channel.

The antenna arrays (for example an antenna array with lambda half pairs) at one frequency may be used to for unambiguous AoA determination, while the antenna array at second frequency may be used to enhance the angular accuracy of the system.

According to an embodiment, the antennas of the second array are spaced by half a wavelength. According to an embodiment, the antennas of the first array are spaced by at least one wavelength.

According to an embodiment, the first array is a two-dimensional array, and/ or the second array is a two-dimensional array.

According to an embodiment, at least one of the antennas of the first array is comprised in the second array, and/ or at least one of the antennas of the second array is comprised in the first array. Thus, there may be antennas that may be operated at both the first frequency and the second frequency.

According to an embodiment, the radar system further comprises a frequency selector (for example frequency selective device, which, for example, may be a part of the controller) coupled to the first array and the second array, wherein the frequency selector is configured to selectively couple the first array using the first frequency or the second array using the second frequency to a circuit for further processing (for example to a microwave integrated circuit, MMIC, port).

The antennas of the first array and/ or of the second array may include dualband/broadband Tx/Rx antennas. Together with the frequency selective Tx/Rx, a dual frequency band system may be provided.

A dual-frequency system may be provided through the use of dualband/broadband transmit and receive antennas, coupled with frequency-selective transmit and receive antennas connected to the same MMIC port of the radar device. The use of frequency-selective antennas with dualband/broadband antennas on two different frequencies may create the overlapping points, whereby the different arrays are anchored to each other by broad-band/dualband antenna elements, which have the same position in both frequencies in combination with frequency-selective antennas.

According to an embodiment, the radar system may further include: a third array of antennas, comprising a third plurality of antennas; and a fourth array of antennas, comprising a fourth plurality of antennas, wherein the antennas of the third array are spaced wider than the antennas of the fourth array; wherein the controller is further configured to operate a first transmit channel at the first frequency using the third array of antennas and to operate a second transmit channel at the second frequency using the fourth array of antennas.

According to an embodiment, the controller may configured to operate the first array of antennas, the second array of antennas, the third array of antennas, and the fourth array of antennas to form a plurality of virtual channels.

According to an embodiment, the third array may be a two-dimensional array; and/ or the fourth array may be a two-dimensional array.

According to an embodiment, at least one of the antennas of the third array may be comprised in the fourth array; and/ or at least one of the antennas of the fourth array is comprised in the third array.

In another aspect, the present disclosure is directed at a vehicle comprising the radar system as described herein.

In another aspect, the present disclosure is directed at a computer implemented method for operating a radar system with a first array of antennas, comprising a first plurality of antennas, and with a second array of antennas, comprising a second plurality of antennas, wherein the antennas of the first array are spaced wider than the antennas of the second array, the method comprising the following steps performed (in other words: carried out) by computer hardware components: operating a first receive channel at a first frequency using the first array of antennas; and operating a second receive channel at a second frequency using the second array of antennas, wherein the first frequency is different from the second frequency.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out (in other words: comprising instructions which, when carried out by a processor, cause the processor to carry out) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like.

Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1A     an antenna system with a plurality of antennas;

Fig. 1B     an illustration of virtual arrays of the antenna system of the dual frequency antenna system;

Fig. 2      an illustration of an automotive dual frequency MIMO;

Fig. 3      an illustration of a dual frequency MIMO system used for improved azimuth and elevation accuracy;

Fig. 4      a graph illustrating phase progression over azimuth angles between the two RX channels with different inter-antenna spacing;

Fig. 5      a spectrum of the angle FFT with $0.5\lambda$ spacing between the RX channels to improve the angular resolution by increasing the number of receive channels;

Fig. 6A     an illustration of the correlation of steering vectors with measurements for four receive channels with distinct inter-antenna elements spacing;

Fig. 6B     an illustration of the correlation (similar to Fig. 6A) for a $2\lambda$ spaced array;

Fig. 7      a spectrum of the angle FFT with 4 RX channels using the proposed concept to improve the angular resolution between the two targets;

Fig. 8      a radar system 800 according to various embodiments; and

Fig. 9      a flow diagram 900 illustrating a method for operating a radar system according to various embodiments.

DETAILED DESCRIPTION

Automotive radar systems are widely used in modern vehicles, for example for Advanced Driver-Assistance Systems (ADAS) and autonomous driving. Detecting and locating objects accurately in the surroundings may be important for safety. Basic radar functionality may require at least two antennas for transmitting and receiving electromagnetic radiation, providing range and Doppler information. To determine the Angle-of-Arrival (AoA) of a target, a minimum of two receivers may be desired. Increasing receive channels may enhance azimuth and/or elevation angle accuracy.

Radar system accuracy may depend on aperture length, determined by the number and arrangement of antenna elements. Uniform linear arrays may offer large apertures for smaller beamwidths and better angular resolution. Adhering to the Nyquist-Shannon sampling theorem during design controls antenna element spacing, preventing aliasing effects within the field of view. However, enlarging the aperture in either the azimuth or elevation direction may necessitate an increased number of antenna elements, thereby increasing the overall costs and complexity, challenging mass production. Therefore, designing radar systems for a specific application may involve balancing aperture length, resolution, and cost.

According to various embodiments, an antenna array configuration with dualband TX (transmitter)/RX (receiver) and frequency-selective TX/RX, aimed at achieving a larger aperture, may be provided. According to various embodiments, a method to enhance angular measurement precision by incorporating an additional antenna array that shares the same receive channels through a dual-frequency approach may be provided. The various embodiments not only improve precision but also provide a practical solution for resolving multiple targets while reducing the number of required receive channels.

Automotive radar systems may include a restricted number of monolithic microwave integrated circuit (MMIC) channels, each linked to an individual antenna. Sparse array configurations, with fewer elements, may be utilized to enhance angular accuracy. However, such arrangements may lead to increased aliased angles, as the inter-antenna spacing surpasses half the wavelength of the design frequency. Resolving these ambiguities may demand intricate processing techniques, necessitating a balance between aperture length and ambiguity. Tackling this challenge may refine precision and accuracy while reducing antenna elements and computational complexities.

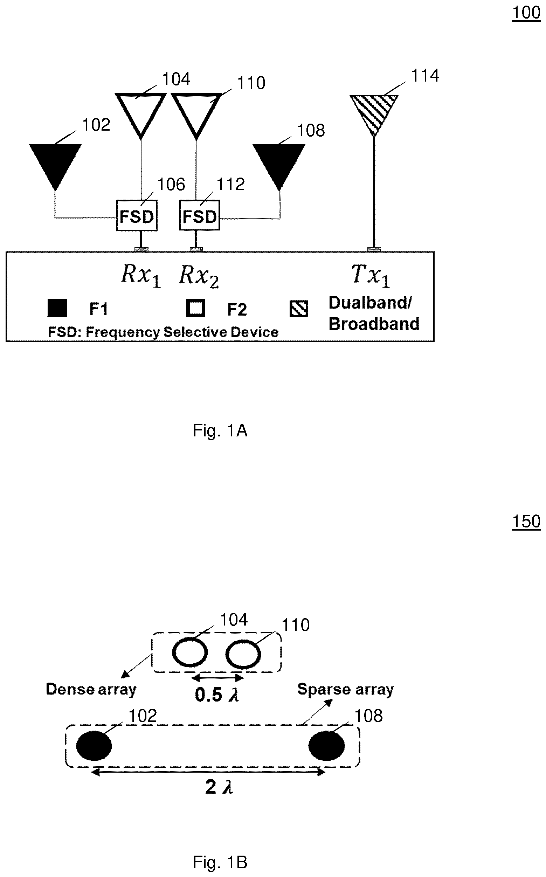

According to various embodiments, an antenna system may be provided which utilizes the same MMIC channels to create an additional antenna array at a different frequency band, facilitated by a frequency-selective device (FSD). The FSD may act as a switch, alternating between coupling a first port linked to the first antenna element and a second port linked to the second antenna element to the common signal port of the radar device. The antenna system according to various embodiments may enable the realization of two distinct sets of antenna array configurations, such as dense and sparse arrays, anchored by dualband antenna elements maintaining the same position in both frequencies. The sparse array may offer a larger aperture, enhancing accuracy for a designated frequency within the radar system. Simultaneously, the dense array operating at another frequency band may resolve measurement ambiguities, as depicted in Fig. 1A and Fig. 1B.

Fig. 1A shows an antenna system (for example a radar system) 100 with a plurality of antennas. A first (receive) antenna 102 may be operated at a first frequency (F1), and a second (receive) antenna 104 may be operated at a second frequency (F2). The first antenna 102 and the second antenna 104 may be connected to a frequency selective device 106. The first antenna 102, the second antenna 104, and the frequency selective device 106 may provide a first receive channel Rx1. A third (receive) antenna 108 may be operated at the first frequency (F1), and a fourth (receive) antenna 110 may be operated at the second frequency (F2). The third antenna 108 and the fourth antenna 110 may be connected to a further frequency selective device 112. The third antenna 108, the fourth antenna 110, and the further frequency selective device 112 may provide a second receive channel Rx2. Yet at further antenna 114, which may be a dualband or broadband antenna, may provide a transmit antenna Tx1. It will be understood that although two receive channels Rx1 and Rx2 are shown in Fig. 1A, more than two receive channels (each with an antenna operated at the first frequency, an antenna operated at the second frequency, and a frequency selective device) may be provided.

Fig. 1B shows an illustration 150 of virtual arrays of the antenna system of the dual frequency antenna system with dualband transmitter and frequency-selective receivers sharing the same MMIC port as illustrated in Fig. 1A. Fig. 1B illustrates the receive channels at F1 and F2 corresponding to the antenna configuration shown in Fig. 1A. In MIMO (multiple-input and multiple-output) systems, the receive and transmit channels may be referred to as virtual arrays.

The second antenna 104 and the fourth antenna 110 may provide a dense array. The first antenna 102 and the third antenna 108 may provide a sparse array. Illustratively, the second antenna 104 and the fourth antenna 110 may be closer together than the first antenna 102 and the third antenna 108. For example, the second antenna 104 and the fourth antenna 110 may be spaced by half of the wavelength ($0.5\lambda$). For example, the first antenna 102 and the third antenna 108 may be spaced by twice the wavelength ($2\lambda$).

The unambiguous field of view ($\Theta_{FOV}$) of the radar may be calculated using equation (1):

$$-\arcsin\left(\frac{\lambda}{2d}\right) \leq \Theta_{FOV} \leq \arcsin\left(\frac{\lambda}{2d}\right) \qquad (1)$$

where $\lambda$ is the wavelength of the radar signal, and $d$ is the spacing between the antenna elements.

Table 1. Unambiguous angle coverage

| Spacing ($\lambda$) | Unambiguous FOV ($\Theta_{FOV}$) |
|---|---|
| 0.5 | +90° |
| 1 | $\pm$30° |
| 1.5 | +19.5° |
| 2 | +14.5° |

Table 1 lists the unambiguous angle coverage of an antenna array with different antenna spacing.

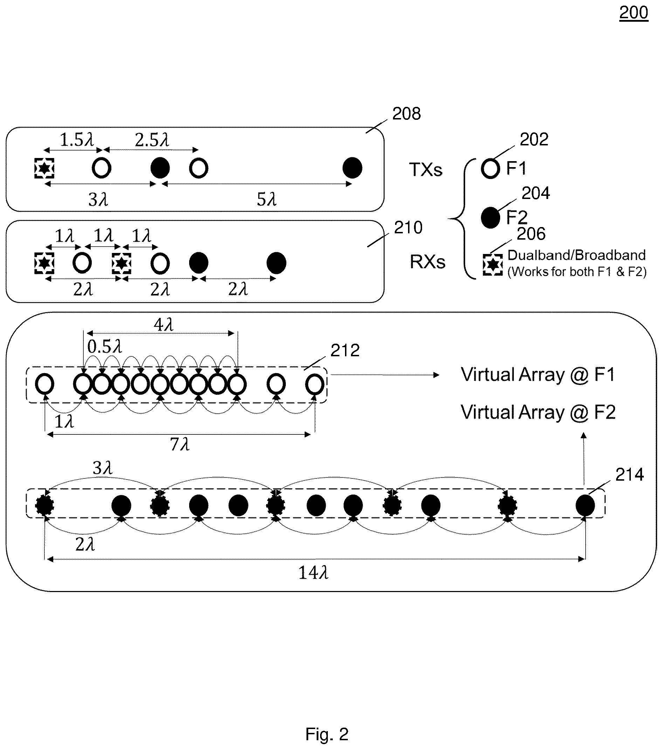

The dual-frequency approach may be applied to unambiguous MIMO arrays, further enhancing the radar system's angular accuracy. The system configuration according to various embodiments may integrate an automotive MMIC radar chip with 3 transmitters (TXs) and 4 receivers (RXs), illustrated in Fig. 2.

Fig. 2 shows an illustration 200 of an automotive dual frequency MIMO. Antennas operated at a first frequency are illustrated by non-filled circles 202. Antennas operated at a second frequency are illustrated by filled circles 204. Dualband or broadband antennas, which work for both the first frequency and the second frequency are illustrated by a start with a dotted frame 206. A transmit antenna 208 and a receive antenna 210 may be provided, and they may provide a (dense) virtual array 212 operating at the first frequency and a (sparse) virtual array 214 operating at the second frequency.

Utilizing dualband and frequency-selective antenna elements according to various embodiments, two distinct set of virtual arrays may be created that operates at different frequency bands, designated as F1 and F2. Dualband antennas may offer advantages in automotive MIMO radar systems, including reduced antenna size for improved integration and the ability to synchronize measurement results across frequency bands, thereby enhancing precision and reliability in automotive radar applications. As shown in Fig. 2, the virtual array at frequency band F1 may combine dense and sparse arrays, resulting in a collective virtual aperture length of $7\lambda$. Furthermore, the virtual array operating at frequency band F2 may achieve a twofold improvement in angular precision.

The relationship between MIMO radar aperture and angular accuracy may be mathematically understood using the concept of angular discrimination ($\Delta\theta$) as expressed using equation (2):

$$\Delta\theta \geq \frac{\lambda}{N \cdot d \cdot \cos(\theta)} \qquad (2)$$

where N is the number of receive antennas and $\theta$ is the angle of the target.

From equation (2), it is evident that angular discrimination and aperture size share an inverse relationship. As the aperture size ($Nd$) increases, angular discrimination ($\Delta\theta$) decreases, leading to improved angular accuracy. Referring to the virtual arrays in Fig.2, the MIMO array at frequency band F1, with an aperture length of $7\theta$, may yield an angular discrimination of 8.2 degrees. Conversely, the MIMO array at frequency band F2, with an aperture of $14\lambda$, may achieve significantly improved angular discrimination of 4.1 degrees, doubling the accuracy.

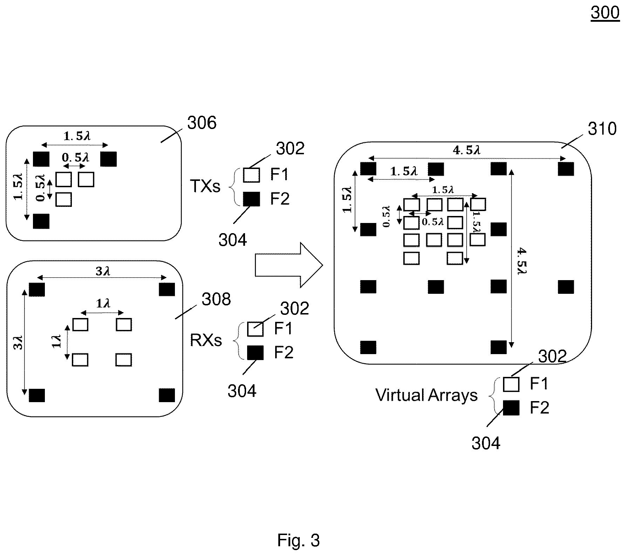

Fig. 3 shows an illustration 300 of a dual frequency MIMO system used for improved azimuth and elevation accuracy. Antennas operated at a first frequency are illustrated by non-filled squares 302. Antennas operated at a second frequency are illustrated by filled squares 304. A transmit antenna array 306 and a receive antenna array 308 may be provided, and they may provide virtual arrays 310.

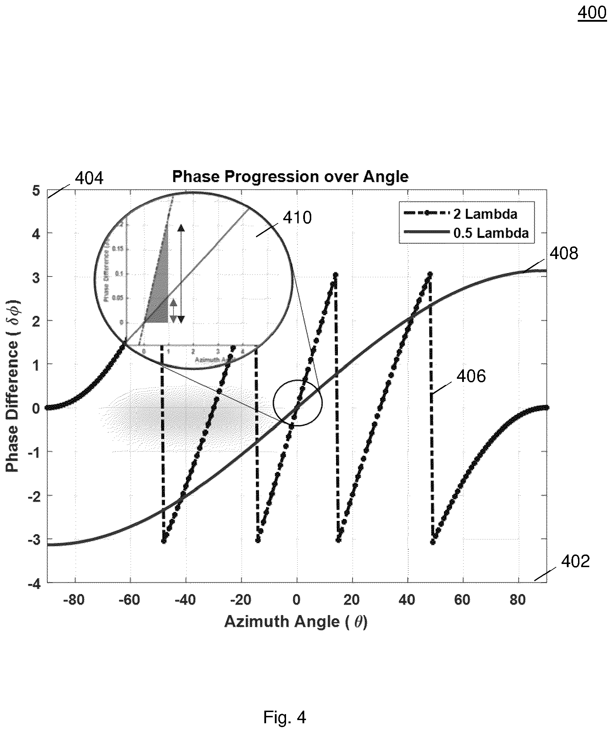

Angle estimation in MIMO radar systems may rely on measuring the additional distance signals travel to reach various antennas. Any systematic errors in phase measurements or noise and interference in received signals may introduce inaccuracies in angle determination. Angle-of-arrival (AoA) estimation was investigated using two distinct FMCW radar configurations, as depicted in Fig. 4.

Fig. 4 shows a graph 400 illustrating phase progression over azimuth angles between the two RX channels with different inter-antenna spacing. A horizontal axis 402 denotes the azimuth angle, and a vertical axis 404 denotes the phase difference. Dotted line 406 illustrates the phase difference for a $2\lambda$ configuration (in other words: for a sparse antenna array). Solid line 408 illustrates the phase difference for a $0.5\lambda$ configuration (in other words: for a dense antenna array). A portion 410 shows an enlarged portion of the graph.

In the $0.5\lambda$ case, slight phase changes may rapidly alter the angle due to linear phase progression, making angular accuracy highly sensitive to phase progression. Conversely, in the $2\lambda$ configuration, the phase progression may be 4x steeper, allowing finer angular changes to be detected with precision. However, this configuration may introduce phase ambiguity issues, as the repeating phase pattern may make it challenging to determine exact angles.

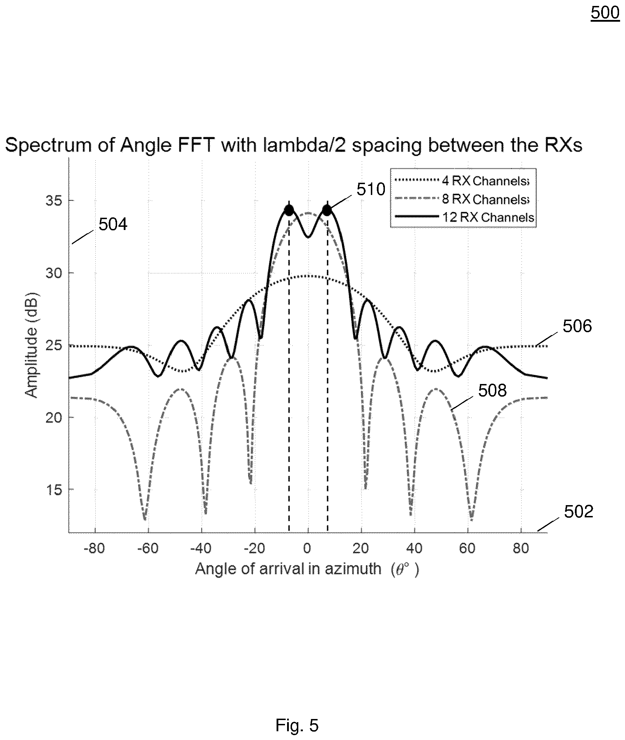

Expanding the antenna array's aperture by increasing the number of receive channels may be a straightforward method to enhance the radar system's angular discrimination. Increasing the number of receive channels may lead to a sharper FFT peak, improving angle estimation accuracy and angular discrimination. To validate this, simulations were conducted with two distinct point targets positioned at azimuth angles of $\theta_1 = -7°$ and $\theta_2 = +7°$, as depicted in Fig. 5.

Fig. 5 shows a spectrum 500 of the angle FFT with $0.5\lambda$ spacing between the RX channels to improve the angular resolution by increasing the number of receive channels. A horizontal axis 502 denotes the angle of arrival in azimuth. A vertical axis 504 denotes the amplitude.

Simulations were performed using 4 receive channels (results are provided in Fig. 5 by dotted line 506), 8 receive channels (results are provided in Fig. 5 by dashed line 508), and 12 receive channels (results are provided in Fig. 5 by solid line 508) with an inter-antenna spacing of $0.5\lambda$. The angle-FFT spectrum analysis reveals that radar systems with 4 and 8 receive channels cannot distinguish between the two targets, while the 12-channel system successfully resolves both targets 510. However, increasing receive channels may raise costs due to additional components such as amplifiers, mixers, filters, and analog-to-digital converters, driving up hardware expenses, power consumption, and complexity. The concept according to various embodiments in Fig. 1 may implement a system with four receive channels, leading to four $2\lambda$-spaced RX antennas at F1 and four $0.5\lambda$-spaced RX antennas at F2, improving angular discrimination and enabling separation of two targets.

The cross-correlation of phase terms in transmitted and received signals with a magnitude $A$, across a virtual array of $N$ elements, may be computed for both dense and sparse arrays using equation (3):

$$z(k) = \frac{A}{N} \sum_{k=1}^{N} e^{-j2\pi[\psi_{rx}(k) - \psi_{tx}(k)]} \qquad (3)$$

where

$$\psi_{rx}(k) = x_k \sin(\phi_{tar}) \cos(\phi_{tar}) + y_k \sin(\phi_{tar}) \qquad (4)$$

is the phase of received target signal at the k-th array element and is determined by the spatial coordinates $x_k$ and $y_k$ of that element, as well as the azimuth ($\theta_{tar}$) and elevation ($\phi_{tar}$) angles of the target. It may characterize how the received signal at the *k*-th element is phased relative to the transmitted signal.

$$\psi_{tx}(k) = x_k \sin(\phi_{tx}) \cos(\phi_{tx}) + y_k \sin(\phi_{tx}) \qquad (5)$$

Equation (5) represents the phase associated with the transmitted signal at the k-th array element. Similar to $\psi_{rx}$ (k), this phase term depends on the spatial coordinates ($x_k$, $y_k$) of the array element and is influenced by the azimuth ($\theta_{tx}$) and elevation ($\phi_{tx}$) angles of the transmitter, describing how the transmitted signal is phased at the *k*-th element.

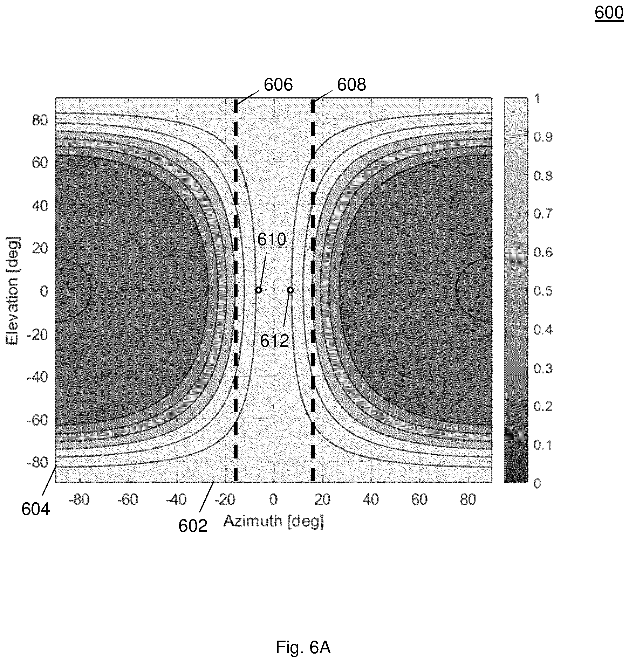

Fig. 6A shows an illustration 600 of the correlation of steering vectors with measurements for four receive channels with distinct inter-antenna elements spacing. A horizontal axis 602 illustrates azimuth, and a vertical axis 604 illustrates elevation. The dashed lines 606 and 608 illustrate the unambiguous angular window to look for the targets, and accordingly, they indicate the true angular location of the target in azimuth.

The correlation may be computed by summing up the complex exponential terms for each element in the virtual array and normalizing the result by the total number of elements in the virtual array. Using equation (3), the transmitted and received target signals may be correlated for the dense antenna array, all positioned in the azimuth plane with $0.5\lambda$ spacing. It may be observed that the two targets, marked with black circles 610 and 612, cannot be distinguished due to the broader peak of the spectrum at the 0-degree elevation plane, as depicted in Fig. 6A. However, it provides an angle window to search for them.

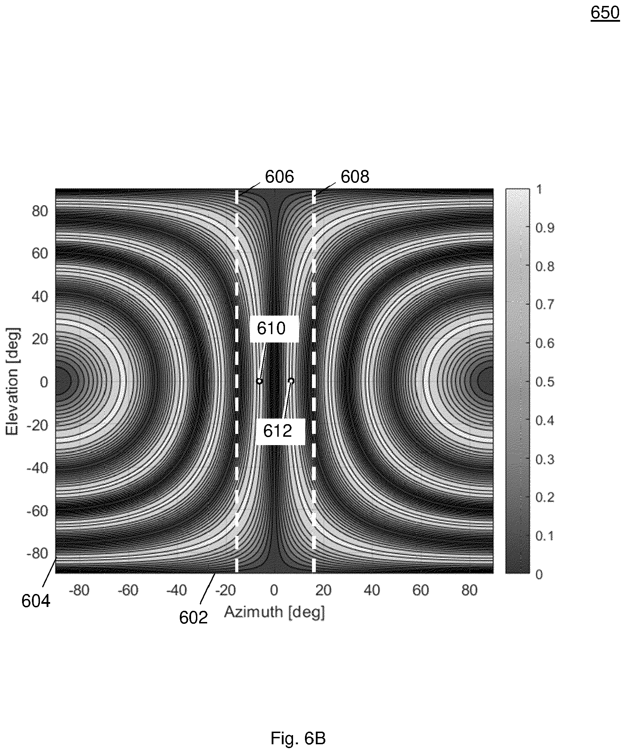

Fig. 6B shows an illustration 650 of the correlation (similar to Fig. 6A) for a $2\lambda$ spaced array.

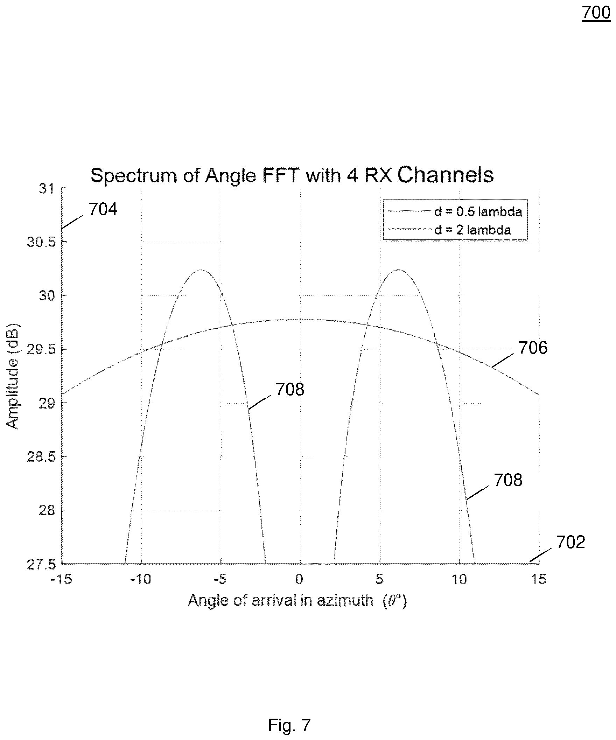

Meanwhile, when the frequency is switched to activate the sparse antenna array, also positioned in the azimuth plane but with $2\lambda$ spacing, as shown in the correlation plot in Fig. 6B, numerous aliasing angles may be observed due to the increased inter-antenna spacing. This may make it challenging to determine the actual target angles. To precisely determine the targets' angles, spectral filtering with a predefined window may be performed by multiplying the magnitudes of the two FFT spectra of dense and sparse antenna arrays. This operation may eliminate unwanted aliasing peaks, retaining only the remaining peaks corresponding to the actual targets' angles. The result of this operation is depicted in Fig. 7.

Fig. 7 shows a spectrum 700 of the angle FFT with 4 RX channels using the proposed concept to improve the angular resolution between the two targets. A horizontal axis 702 denotes the angle of arrival in azimuth, and a vertical axis 704 denotes the amplitude.

In Fig. 7, the dense antenna array spectrum (shown with a line 706) helps identify the window where the target peaks are in the ambiguous spectrum of the sparse array (shown with lines 708). The actual targets' angles are extracted at approximately azimuth angles $\theta_1$ = -7° and $\theta_2$ = +7°.

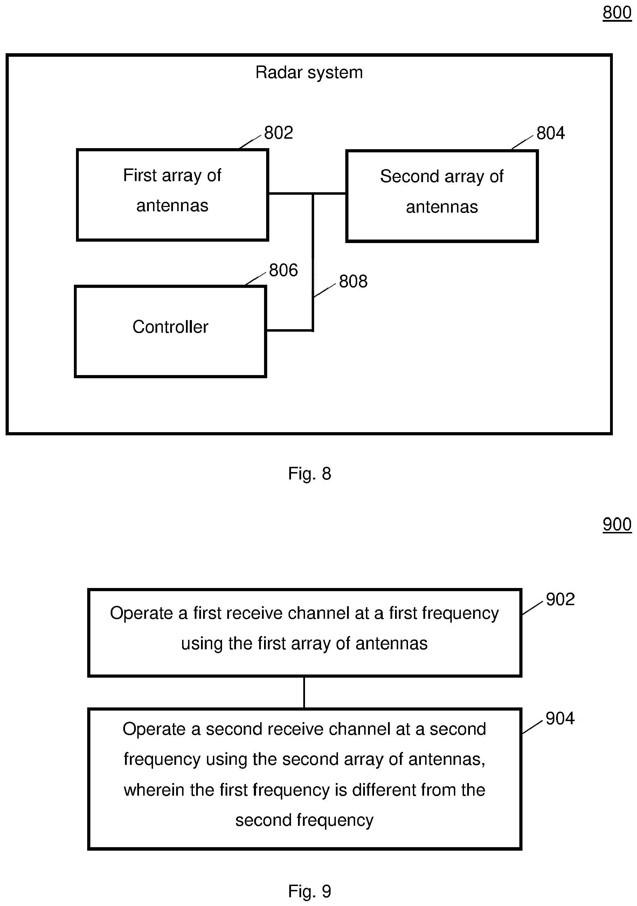

Fig. 8 shows a radar system 800 according to various embodiments. The radar system may include a first array 802 of antennas, a second array 804 of antennas, and a controller 806. The first array 802 of antennas, the second array 804 of antennas, and the controller 806 may be coupled with each other, e.g. via an electrical connection 808, such as e.g. a cable or a computer bus or via any other suitable electrical connection to exchange electrical signals. The first array 802 of antennas may include (or may be formed by) a first plurality of antennas. The second array 804 of antennas may include (or may be formed by) a second plurality of antennas. The antennas of the first array 802 may be spaced wider than the antennas of the second array 804. The controller 806 may be configured to operate a first receive channel at a first frequency using the first array 802 of antennas and to operate a second receive channel at a second frequency using the second array 804 of antennas. The first frequency may be different from the second frequency.

According to various embodiments, the controller 806 may further be configured to determine an angle of arrival of a radar signal based on the first receive channel and the second receive channel.

According to various embodiments, the controller 806 may further be configured to enhance a detection quality of an unambiguous angle of arrival based on the first receive channel and the second receive channel.

According to various embodiments, the antennas of the second array 804 may be spaced by half a wavelength.

According to various embodiments, the antennas of the first array 802 may be spaced by at least one wavelength.

According to various embodiments, the first array 802 may be a two-dimensional array, and/ or the second array 804 may be a two-dimensional array.

According to various embodiments, at least one of the antennas of the first array 802 may be comprised in the second array 804, and/ or at least one of the antennas of the second array 804 may be comprised in the first array 802.

According to various embodiments, the radar system may further include a third array of antennas, including (or being formed by) a third plurality of antennas, and a fourth array of antennas, including (or being formed by) a fourth plurality of antennas, wherein the antennas of the third array may be spaced wider than the antennas of the fourth array; and the controller 806 may further be configured to operate a first transmit channel at the first frequency using the third array of antennas and to operate a second transmit channel at the second frequency using the fourth array of antennas.

According to various embodiments, the controller 806 may be configured to operate the first array 802 of antennas, the second array 804 of antennas, the third array of antennas, and the fourth array of antennas to form a plurality of virtual channels.

According to various embodiments, the third array may be a two-dimensional array, and/ or the fourth array may be a two-dimensional array.

According to various embodiments, at least one of the antennas of the third array may be comprised in the fourth array; and/ or at least one of the antennas of the fourth array may be comprised in the third array.

Fig. 9 shows a flow diagram 900 illustrating a method according to various embodiments for operating a radar system with a first array of antennas, comprising a first plurality of antennas, and with a second array of antennas, comprising a second plurality of antennas, wherein the antennas of the first array are spaced wider than the antennas of the second array. At 902, a first receive channel may be operated at a first frequency using the first array of antennas. At 904, a second receive channel may be operated at a second frequency using the second array of antennas, wherein the first frequency is different from the second frequency.

Each of the steps 902, 904 and the further steps described above may be performed by computer hardware components.

As described herein, a system may be provided for automotive radars using a dual-frequency approach with an antenna system sharing the same MMIC port for its operation. According to various embodiments, these systems may be realized using a combination of dualband with frequency-selective antennas which has the same position in both the frequencies. This approach may give the radar system dual-mode capability, enhancing performance parameters. For example, as demonstrated, this capability may improve angular accuracy and disambiguate radar measurements with fewer receive channels and reduced computational complexity. Simulation results affirm the efficiency and cost-effectiveness of these methods in realizing MIMO systems.

The systems and methods according to various embodiments may provide dual mode MIMO with higher accuracy, may provide an increased aperture, may be suitable for ambiguous and unambiguous measurements, may be easy to implement (for example for side radars with a smaller number of antennas), and may be implemented at reduced cost and with reduced computational complexity.

Reference numeral list

| 100 | antenna system |
| 102 | first antenna |
| 104 | second antenna |
| 106 | frequency selective device |
| 108 | third antenna |
| 110 | fourth antenna |
| 112 | further frequency selective device |
| 114 | further antenna |

| 150 | illustration of virtual arrays of the antenna system |

| 200 | illustration of an automotive dual frequency MIMO |
| 202 | non-filled circles |
| 204 | filled circles |
| 206 | dotted frame |
| 208 | transmit antenna |
| 210 | receive antenna |
| 212 | virtual array |
| 214 | virtual array |

| 300 | illustration of a dual frequency MIMO system used for improved azimuth and elevation accuracy |
| 302 | non-filled squares |
| 304 | filled squares |

| 306 | transmit antenna array |
|---|---|
| 308 | receive antenna array |
| 310 | virtual arrays |
| 400 | graph illustrating phase progression over azimuth angles between the two RX channels with different inter-antenna spacing |
| 402 | horizontal axis |
| 404 | vertical axis |
| 406 | dotted line |
| 408 | solid line |
| 410 | enlarged portion of the graph |

| 500 | spectrum of the angle FFT with $0.5\lambda$ spacing between the RX channels to improve the angular resolution by increasing the number of receive channels |
|---|---|
| 502 | horizontal axis |
| 504 | vertical axis |
| 506 | dotted line |
| 508 | solid line |
| 510 | targets |

| 600 | illustration of the correlation of steering vectors with measurements for four receive channels with distinct inter-antenna elements spacing |
|---|---|
| 602 | horizontal axis |
| 604 | vertical axis |
| 606, 608 | dashed lines illustrating the unambiguous angular window to look for the targets |
| 610 | circle |
| 612 | circle |

| 650 | illustration of the correlation for a $2\lambda$ spaced array |
|---|---|

| 700 | spectrum of the angle FFT with 4 RX channels using the proposed concept to improve the angular resolution between the two targets |
|---|---|
| 702 | horizontal axis |
| 704 | vertical axis |
| 706 | line |
| 708 | line |

| 800 | radar system according to various embodiments |
|---|---|
| 802 | first array of antennas |
| 804 | second array of antennas |
| 806 | controller |
| 808 | connection |

| 900 | flow diagram illustrating a method for operating a radar system according to various embodiments |
|---|---|
| 902 | step of operating a first receive channel at a first frequency using the first array of antennas |
| 904 | step of operating a second receive channel at a second frequency using the second array of antennas |

**Claims**

1. Radar system comprising:

    a first array (802) of antennas, comprising a first plurality of antennas;
    a second array (804) of antennas, comprising a second plurality of antennas, wherein the antennas of the first array (802) are spaced wider than the antennas of the second array (804); and
    a controller (806) configured to operate a first receive channel at a first frequency using the first array (802) of antennas and to operate a second receive channel at a second frequency using the second array (804) of antennas, wherein the first frequency is different from the second frequency.

2. The radar system of claim 1,

wherein the controller (806) is further configured to determine an angle of arrival of a radar signal based on the first receive channel and the second receive channel.

3. The radar system of claim 2,
wherein the controller (806) is further configured to enhance a detection quality of an unambiguous angle of arrival based on the first receive channel and the second receive channel.

4. The radar system at least one of claims 1 to 3,

    wherein the antennas of the second array (804) are spaced by half a wavelength; and/ or
    wherein the antennas of the first array (802) are spaced by at least one wavelength.

5. The radar system of at least one of claims 1 to 4,

    wherein the first array (802) is a two-dimensional array; and/ or
    wherein the second array (804) is a two-dimensional array.

6. The radar system of at least one of claims 1 to 5,

    wherein at least one of the antennas of the first array (802) is comprised in the second array (804); and/ or
    wherein at least one of the antennas of the second array (804) is comprised in the first array (802).

7. The radar system of at least one of claims 1 to 6, further comprising:
a frequency selector coupled to the first array (802) and the second array (804), wherein the frequency selector is configured to selectively couple the first array (802) using the first frequency or the second array (804) using the second frequency to a circuit for further processing, preferably to a microwave integrated circuit, MMIC, port.

8. The radar system of at least one of claims 1 to 7, further comprising:

    a third array of antennas, comprising a third plurality of antennas; and
    a fourth array of antennas, comprising a fourth plurality of antennas,
    wherein the antennas of the third array are spaced wider than the antennas of the fourth array;
    wherein the controller (806) is further configured to operate a first transmit channel at the first frequency using the third array of antennas and to operate a second transmit channel at the second frequency using the fourth array of antennas.

9. The radar system of claim 8,
wherein the controller (806) is configured to operate the first array (802) of antennas, the second array (804) of antennas, the third array of antennas, and the fourth array of antennas to form a plurality of virtual channels.

10. The radar system of at least one of claims 8 to 9,

    wherein the third array is a two-dimensional array; and/ or
    wherein the fourth array is a two-dimensional array.

11. The radar system of at least one of claims 8 to 10,

    wherein at least one of the antennas of the third array is comprised in the fourth array; and/ or
    wherein at least one of the antennas of the fourth array is comprised in the third array.

12. Vehicle comprising the radar system of at least one of claims 1 to 11.

13. Computer implemented method for operating a radar system with a first array (802) of antennas, comprising a first plurality of antennas, and with a second array (804) of antennas, comprising a second plurality of antennas, wherein the antennas of the first array (802) are spaced wider than the antennas of the second array (804), the method comprising the following steps carried out by computer hardware components:

    operating (902) a first receive channel at a first frequency using the first array of antennas; and

operating (904) a second receive channel at a second frequency using the second array of antennas, wherein the first frequency is different from the second frequency.

14. Computer system, the computer system comprising a plurality of computer hardware components configured to carry out steps of the computer implemented method of claim 13.

15. Non-transitory computer readable medium comprising instructions for carrying out the computer implemented method of claim 13.

100

Fig. 1A

150

Fig. 1B

Fig. 2

300

Fig. 3

400

Fig. 4

500

Fig. 5

Fig. 6A

650

Fig. 6B

<u>700</u>

Fig. 7

800

Radar system

First array of antennas 802

Second array of antennas 804

Controller 806

808

Fig. 8

900

Operate a first receive channel at a first frequency using the first array of antennas 902

Operate a second receive channel at a second frequency using the second array of antennas, wherein the first frequency is different from the second frequency 904

Fig. 9

## EUROPEAN SEARCH REPORT

**Application Number**

EP 24 18 3589

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/239821 A1 (VOLLBRACHT DENNIS [DE] ET AL) 5 August 2021 (2021-08-05) * paragraphs [0003], [0013], [0014], [0044], [0046], [0049], [0067] - [0069], [0080], [0126] - [0132], [0140], [0174]; figures 1,12,13 * ----- | 1-15 | INV. G01S7/03 G01S13/42 G01S13/931 |
| X | US 2023/236288 A1 (VOLLBRACHT DENNIS [DE] ET AL) 27 July 2023 (2023-07-27) * paragraphs [0004], [0005], [0041] - [0052], [0084]; figures 1,2,6,9 * ----- | 1-15 | |
| X | WO 2022/229386 A1 (PROVIZIO LTD [IE]) 3 November 2022 (2022-11-03) * page 7, lines 8-18, 24-27; figures 2-4, 10, 12 * * page 7, line 29 - page 8, line 7 * * page 9, lines 4-13 * * page 16, lines 4-8,30-32; figure 12a * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 24 October 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3589

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | | Publication date |
|---|---|---|---|---|
| US 2021239821 A1 | 05-08-2021 | CN | 113281751 A | 20-08-2021 |
| | | EP | 3862773 A1 | 11-08-2021 |
| | | US | 2021239821 A1 | 05-08-2021 |
| US 2023236288 A1 | 27-07-2023 | CN | 116500607 A | 28-07-2023 |
| | | EP | 4220223 A1 | 02-08-2023 |
| | | US | 2023236288 A1 | 27-07-2023 |
| WO 2022229386 A1 | 03-11-2022 | EP | 4331048 A1 | 06-03-2024 |
| | | US | 2024219552 A1 | 04-07-2024 |
| | | WO | 2022229386 A1 | 03-11-2022 |

EPO FORM P0459

For more details about this annex : see Official Journal of the European Patent Office, No. 12/82